# EUROPEAN PATENT APPLICATION

(11) **EP 3 709 051 A1**
(43) Date of publication of application: **16.09.2020**
(21) Application number: 20163209.8
(22) Date of filing: 14.03.2020
(51) Int. Cl.: G01S 7/481, G01S 17/931, G01S 7/484

(54) **FLEXIBLE FIELD OF VIEW SOLID STATE LIDAR**

(30) Priority: 14.03.2019 US 201916353707
(71) Applicant: Visteon Global Technologies, Inc., Van Buren Township, MI 48111-5711 (US)
(72) Inventor: NGUYEN, Giang-Nam, 76227 Karlsruhe (DE); WILMER, Thorsten, 76646 Bruchsal (DE); NARAYAN, Vikram, Novi, Michigan 48375 (US)
(74) Representative: MERH-IP Matias Erny Reichl Hoffmann Patentanwälte PartG mbB

(57) **Abstract**

A system for a vehicle may include a laser driver configured to produce a laser. The system may also include phased array optics provided at an output of the laser driver. The phased array optics may receive the laser. As such, the phased array optics may be within a pathway of the laser. The system may further include a controller configured to control the laser driver and the phased array optics to provide a variable field of vision pattern for a vehicle.

## Description

### FIELD

Various vehicle systems may benefit from suitable sensor equipment. For example, certain driving systems may benefit from a flexible field of view solid-state light distance and ranging system.

### RELATED ART

A conventional light detection and ranging (LiDAR) system includes a fixed field of view (FOV), such as a circular sector. A circular sector refers to a beam that has equal horizontal and vertical angles of detection.

In the two-dimensional (2D) angular space, horizontal and vertical, the conventional LiDAR system generates a uniform laser intensity spot array, in a rectangular shape, an elliptical shape, or any other shape. Due to the fixed mechanical/electronic/optical setup, the shape of this spot array is similarly fixed.

Due to the fixed FOV, the conventional LiDAR system is limited to a specific scenario. To address this limitation, one approach is to use a combination of multiple conventional LiDAR systems, where one conventional LiDAR system has a different FOV from another conventional LiDAR system. While this may increase the number of scenarios, use of multiple conventional LiDAR systems increases weight, cost, and complexity, such as in regards to processing demand. The more conventional LiDAR systems that are used, the greater the packaging size.

### SUMMARY

One or more embodiments may include an object and range detection system for a vehicle. The object and range detection system may include a laser driver for producing a laser. The object and range detection system may include phased array optics. The phased array optics may be at an output of the laser driver. The object and range detection system may include a controller for controlling the laser driver and the phased array optics. The controller, through controller the laser driver and the phased array optics, may vary a field of vision pattern for the vehicle.

One or more embodiments may include a non-transitory computer-readable storage medium. The non-transitory computer-readable storage medium may include instructions that, when executed by a processor, cause the processor to perform a process. The process may include determining a region of interest to a vehicle. The process may further include controlling a laser driver and phased array optics to provide a variable field of vision pattern for the vehicle based on the determined region of interest.

According to certain embodiments, a system can include a laser driver configured to produce a laser. The system can also include phased array optics provided at an output of the laser. The system can further include a controller configured to control the laser driver and the phased array optics to provide a variable field of vision pattern for a vehicle.

In certain embodiments, a method can include determining a region of interest to a vehicle. The method can also include controlling a laser driver and phased array optics to provide a variable field of vision pattern for the vehicle based on the determined region of interest.

### BRIEF DESCRIPTION OF THE DRAWINGS

The accompanying drawings are provided for purposes of illustration and not by way of limitation.
Figure 1 illustrates several spot arrays according to certain embodiments.
Figure 2 illustrates intensity distributions according to certain embodiments.
Figure 3 illustrates a top view of several modes of operation, according to certain embodiments.
Figure 4 illustrates a system according to certain embodiments.
Figure 5 illustrates a method according to certain embodiments.

### DETAILED DESCRIPTION

According to certain embodiments, a system can include a laser driver configured to produce a laser. The laser may be in the 600 nanometer (nm) to 1000 nm range. Other wavelengths are also permitted. For example, 1550 nm and 1064 nm are also permitted.

The system can also include phased array optics provided at an output of the laser driver. The optics can include a spatial light modulator. In relation to the laser, the spatial light modulator or other phased array optics can be configured to modulate the phase of a beam, or both the phase and the intensity of the beam.

The system can further include a controller configured to control the laser driver and the phased array optics to provide a variable field of vision pattern for a vehicle. The controller can include one or more controller. The controllers can be any suitable hardware device. For example, a controller can be an application specific integrated circuit (ASIC), a field programmable gate array (FPGA), a microprocessor, a processor including one or multiple processing cores, or any other circuit, such as a discrete logic circuit. The controller can include a memory, which can be any storage element, such as a non-transitory computer-readable medium. The memory may be read only memory or random access memory. The memory and the processor can be embodied on the same chip or on different chips. Other embodiments are also permitted.

The controller can be configured to receive environmental information regarding the vehicle. The control of the laser driver and the phased array optics can be based on the received environmental information. The environmental information can include map information, detected targets, speed of the vehicle, or position of the vehicle. Thus, for example, the environmental information can be received from an advanced driver-assistance system, from a navigation system, from a vehicle controller, from other sensor systems, from a yoke or steering wheel position sensor, or from manual user input. The environmental information may take into account a gear of the vehicle, such as whether the vehicle is in a forward drive gear or a reverse drive gear.

The variable field of vision pattern can be configured to provide at least two of the following: a narrow angle field of vision; a wide angle field of vision, an off-axis field of vision; and a time divided field of vision. For the variable field of vision pattern, the controller can be configured to select between a high intensity top hat distribution and a low intensity top hat distribution.

The controller configured to control the laser driver and the phased array optics to provide a spot array. The spot array can include at least two of an on-axis pattern, an off-axis pattern, a uniform pattern, a non-uniform pattern, a rectangular pattern (two different rectangular patterns can be used), and an elliptical pattern (two different elliptical patterns can be used).

A method can be implemented using the system described above, or any similar system. The method can include determining a region of interest to a vehicle. When a vehicle, such as a car, is moving in a forward direction, such as straight forward, the region of interest may be directly in front of the car. When the vehicle is moving in a reverse direction, such as straight backward, the region of interest may be directly behind the car.

The region of interest can be determined in a variety of ways. For example, the region of interest can be determined based on position information of the vehicle and/or speed information of the vehicle. The region of interest can be determined based on a predicted turn of the vehicle and/or on a maneuver (predicted or currently occurring) of the vehicle. Predictions can be based on sensor data, previous experience with the driver, vehicle data and/or navigational data, such as maps. The maneuver can be any of the following, in any combination: parking, highway driving, school zone driving, inclement weather driving, lane changing driving, urban driving, or suburban neighborhood driving.

The method can further include controlling a laser driver and phased array optics to provide a variable field of vision pattern for the vehicle based on the determined region of interest. The variable field of vision pattern can provide at least two of a narrow angle field of vision, a wide angle field of vision, an off-axis field of vision, and a time divided field of vision. The field of vision pattern can be varied between two patterns or among more than two patterns. The controlling can select between a high intensity top hat distribution and a low intensity top hat distribution. The controlling can provide variable detection angles, variable detection ranges, temporal modulation, or any combination thereof. For example, the controlling can change a detection angle based on speed of the vehicle and also based on a predicted turn or lane change of a vehicle. Prediction can include predictions based on an evaluation of the road, other vehicles, the driver, and previous experience. The predictions can also include maneuvers that the vehicle itself or a collision avoidance system have planned or are evaluating.

The variable detection angles can vary in two dimensions. For example, a detection beam can have a first horizontal angle and a first vertical angle that are wide, and a second horizontal angle and a second vertical angle that are narrow. The former beam may be a broad view beam, whereas the latter beam may be a narrow pencil beam.

The controller can be configured to control the laser driver and the phased array optics to provide a spot array. The spot array can include at least two of an on-axis pattern, an off-axis pattern, a uniform pattern, a non-uniform pattern, a rectangular pattern, and an elliptical pattern.

In certain embodiments, the system may employ multiple patterns for multiple purposes. For example, the system may routinely do a broad scan once per second, narrow off-axis scans twice per second, and highlighting scans of any area where a potential target has been determined. The system can follow a preset order of patterns for driving straight, but may depart from this pattern when there is a turn expected. For example, when a map shows that the vehicle will need to turn in a 100 meters, the system may focus more narrow patterns in the direction of the turn.

Certain embodiments provide a solid state LiDAR. Moreover, in certain embodiments, the shape of the FOV is electronically flexible. For example, in certain embodiments both the detection range and the angles of detection can be changed in real time. For example, the vehicle may go from a first driving scenario, such as highway driving, which requires a first detection range, such as long range, to a second driving scenario, such as city driving, which requires a second detection range, such as short-range. The transition from the first detection range to the second detection range may happen in real time.

Moreover, certain embodiments use phased array optics, as mentioned above. Examples of phased array optics include spatial light modulators, dynamic diffractive optical elements, and dynamic holography. In certain embodiments, the phased array optics can change a spot array of the laser, from the laser driver, in real time. The controller may set an intensity distribution for the phased array optics and/or the laser driver. The intensity distribution may be a top-hat function, a Gaussian function, or any other desired function. These different intensity distribution functions can be controlled, via the controller, by electronically changing phase and amplitude of the laser, via the laser driver and/or phased array optics, over a two dimensional addressable surface. The intensity distribution can, in certain embodiments, be controlled, by the controller, by relying on situation awareness input. This situational awareness input may be obtained through, for example, path planning, navigation, and feedback from other sensors, such as cameras, radars, or the like.

The above approach may be variously implemented. For example, the controller may calculate a pattern for the phased array optics in real time to split the laser beam coming from the laser into a spot array corresponding to a desired Field Of View. The controller may also calculate a required total power of the laser beam, so that the highest intensity spot in the array satisfies an eye safety requirement (or any other desired regulation or safety limit). This limitation on power may correspondingly affect the detection range. The total laser power to be used may then communicated to the laser driver to modulate the laser beam using current modulation, pulse width modulation or any other desired method.

The controller may set a pattern for the spot array. This may be through a calculation. The calculation can be done using any technique including, but not limited to, iterative Fourier transform, simulated annealing, or genetic algorithm. The detection range and therefore power consumption can be changed through a laser intensity modulation, taking into account issues such as eye safety requirements at a highest intensity spot in the array. The LiDAR system can also be multiplexed in time domain to combine multiple fields of vision. The controller may set the pattern of the spot array by, for example, adjusting parameters of the phased array optics. For example, the controller may alter the voltages applied to each pixel of the spatial light modulator, or may change the micro-structures and/or nano-structures of a dynamic diffractive optical element or dynamic holographic system.

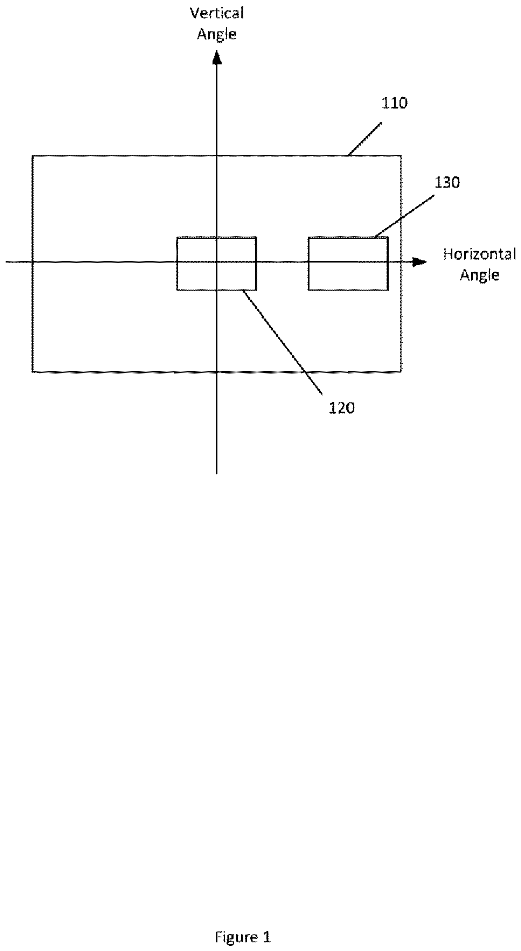

Figure 1 illustrates several spot arrays according to certain embodiments. As shown in Figure 1, one option is for the spot array to be a wide or large angle array 110. This is shown as a rectangular array, but could be other shapes, such as elliptical, square, circular, hexagonal, or any other desired shape. Another alternative is for the spot array to be a narrow or small angle array 120. Both the small angle array 120 and large angle array 110 are shown as on-axis arrays. As with the large angle array 110, the small angle array 120 can be rectangular (as shown) or other shapes. In certain embodiments, the small angle array 120 can be a particular fraction of the array of the large angle array 110. A spot array can also be provided as an off-axis spot array 130. As shown, the off-axis spot array 130 is displaced from the origin in the horizontal direction. Other off-axis arrays could be displaced in the vertical direction or in both directions. In certain embodiments, a scanning pattern of small angle arrays could traverse a large angle array within a predetermined time. In other embodiments, the system may alternate between an on-axis small angle spot array and an on-axis large angle spot array during typical operation, with the use of an off-axis spot array during a current, planned, or predicted turning maneuver.

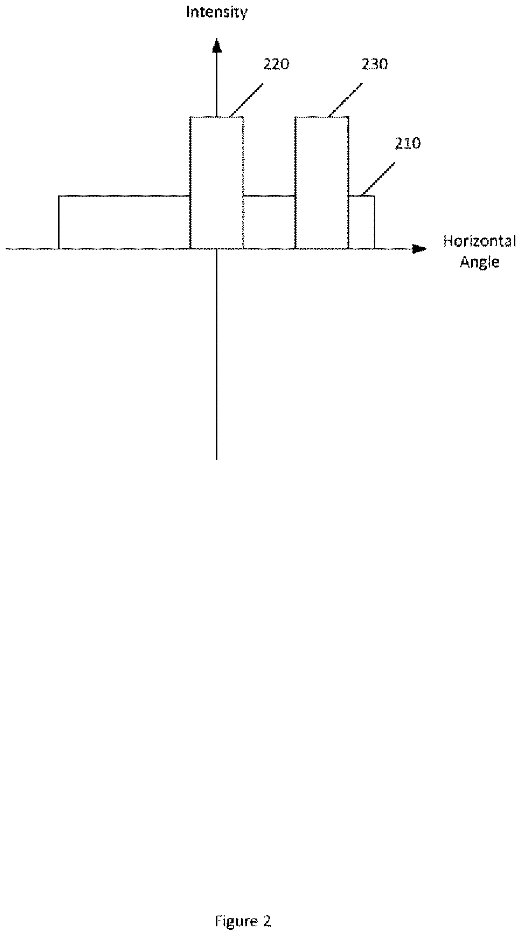

Figure 2 illustrates intensity distributions according to certain embodiments. As shown in Figure 2, a spot array can have a variety of intensity distributions. For example, various top hat distributions are possible, as shown. As shown in Figure 2, the intensity axis may be shown at the optical axis of the horizontal distribution. A low intensity top hat distribution 210 may have a low intensity distributed across a wide angle. By contrast, a high intensity top hat distribution 220 may have a high intensity distributed across a narrow angle. In certain embodiments, there can be a high intensity off-axis distribution 230.

Each of the distributions are shown in one dimension, but a distribution can be two-dimensional. For example, the off-axis spot array 130 of Figure 1 may have high intensity top hat distribution 220 in the vertical direction and high intensity off-axis distribution 230 in the horizontal direction. Other intensity distributions, such as Gaussian distributions, are also permitted. Furthermore, the intensity distribution may have more than one point of maximum intensity. For example, in two dimensions a spot array distribution may be a ring and consequently in one dimension a two-peaked intensity distribution may exist in certain cross-sections of the ring.

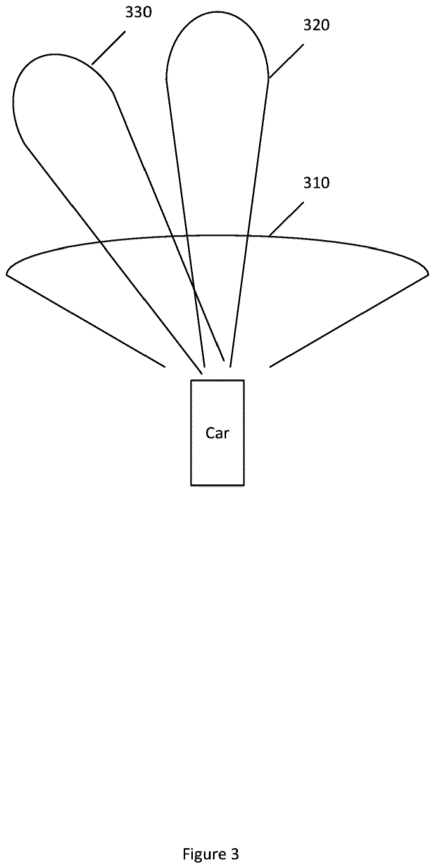

Figure 3 illustrates a top view of several modes of operation, according to certain embodiments. As shown in Figure 3, a vehicle, such as a car, can be equipped with a forward projecting laser system, such as a dynamic LiDAR system. The system can selectably operate in a variety of modes. For example, in a low speed mode 310, the system may scan a wide area with low intensity. This low speed mode 310 may be suitable for parking or navigating in areas with pedestrian crossing, such as a school zone. High speed mode 320 may scan a narrower angular range with a higher intensity. This mode may be suitable for highway driving, for example, when there are few turns and few expected obstacles. Finally, a turning mode 330 may be useful when a turn is expected, planned, or predicted. The turning mode 330 is shown as if a left turn of a certain angle is predicted, but other beams could be used for right turns or turns of other angles.

The various approaches shown in Figures 1 through 3 can be subject to temporal modulation. For example, in a first period a first pattern can be used and in a second period a second pattern can be used. This can be two narrow beams that simulate a wide beam, or can be a scanning pattern. Other temporal modulations are also permitted.

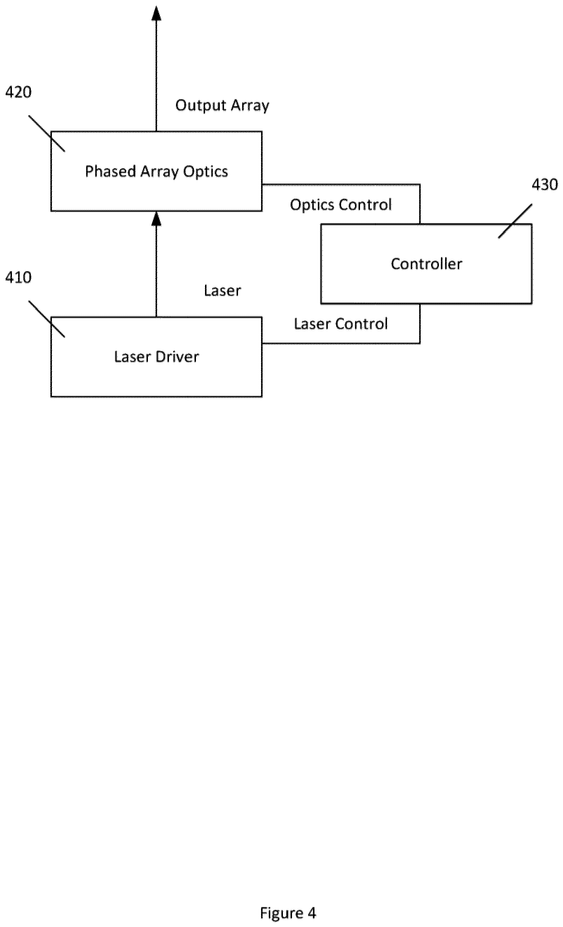

Figure 4 illustrates a system according to certain embodiments. As shown in Figure 4, a system can include a laser driver 410 configured to produce a laser. The system can also include phased array optics 420 provided to receive the laser. As such, the phased array optics 420 may be within a pathway of the laser. The phased array optics may be placed at an output of the laser driver 410. The system can further include a controller 430 configured to control the laser driver 410 and the phased array optics 420 to provide a variable field of vision pattern for a vehicle.

The controller 430 can be configured to receive environmental information regarding the vehicle. The control of the laser driver 410 and the phased array optics 420 can be based on the received environmental information. The environmental information can include at least one of map information, detected targets, speed of the vehicle, or position of the vehicle. The variable field of vision pattern can be configured to provide at least two of a narrow angle field of vision, a wide angle field of vision, an off-axis field of vision; and a time divided field of vision. Other patterns are also permitted, as discussed above.

For the variable field of vision pattern, the controller 430 can be configured to select between a high intensity top hat distribution and a low intensity top hat distribution. Other distributions are also permitted, as described above.

The controller 430 can be configured to control the laser driver 410 and the phased array optics 420 to provide a spot array. The spot array can include at least two of an on-axis pattern, an off-axis pattern, a uniform pattern, a non-uniform pattern, a rectangular pattern, and an elliptical pattern.

The controller 430 and the phased array optics 420 can be configured to change detection range and angles of detection of the laser in real time. The laser driver 410 and phased array optics 420 can be part of a solid state light distance and ranging (LiDAR) system.

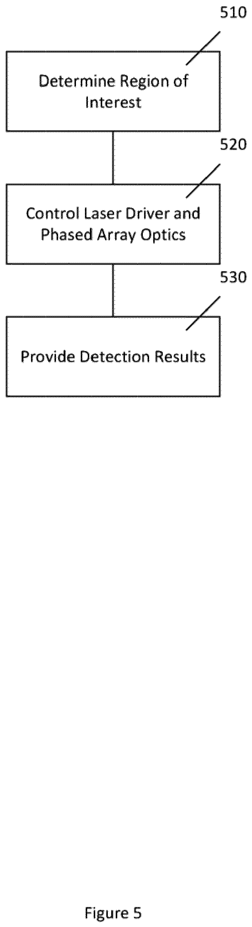

Figure 5 illustrates a method according to certain embodiments. As shown in Figure 5, the method can include, at 510, determining a region of interest to a vehicle. This may be the same vehicle discussed above with reference to Figure 4. Accordingly, some of the same parts may be labelled with reference to Figure 4, although other hardware implementations are also permitted.

The region of interest can be determined based on position information of the vehicle and/or speed information of the vehicle. In certain embodiments, the region of interest can be determined based on a predicted turn of the vehicle. In certain embodiments, the region of interest can be determined based on a maneuver of the vehicle. The maneuver can include parking, highway driving, school zone driving, inclement weather driving, lane changing driving, urban driving, suburban neighborhood driving, or any combination thereof.

As shown in Figure 5, the method can also include, at 520, controlling a laser driver 410 and phased array optics 420 to provide a variable field of vision pattern for the vehicle based on the determined region of interest. The variable field of vision pattern can provide at least two of a narrow angle field of vision, a wide angle field of vision, an off-axis field of vision, and a time divided field of vision.

The controlling at 520 can select between a high intensity top hat distribution and a low intensity top hat distribution. Moreover, the controlling at 520 can provide variable detection angles, variable detection ranges, temporal modulation, or any combination thereof. The variable detection angles can vary in two dimensions.

The controlling at 520 can include controlling the laser driver 410 and the phased array optics 420 to provide a spot array. The spot array can include at least two of an on-axis pattern, an off-axis pattern, a uniform pattern, a non-uniform pattern, a rectangular pattern, and an elliptical pattern. The controlling at 520 can include changing detection range and angles of detection of the laser in real time.

The method can further include, at 530, providing detection results based on laser detection from the variable field of vision pattern. The results can be provided to a variety of systems, such as a navigational system, an advanced driving awareness system (ADAS), a collision avoidance system, and/or a user interface, such as a head up display (HUD).

## Claims

1. An object and range detection system for a vehicle, the object and range detection system comprising:
a laser driver configured to produce a laser;
phased array optics to receive the laser; and
a controller configured to control the laser driver and the phased array optics to provide a variable field of vision pattern for the vehicle.

2. The object and range detection system of claim 1, wherein the controller is configured to receive environmental information regarding the vehicle, wherein the control of the laser driver and the phased array optics is based on the received environmental information.

3. The object and range detection system of claim 2, wherein the environmental information comprises at least one of map information, detected targets, speed of the vehicle, and position of the vehicle.

4. The object and range detection system of claim 1, wherein the variable field of vision pattern is configured to provide at least two of a narrow angle field of vision, a wide angle field of vision, an off-axis field of vision, and a time divided field of vision.

5. The object and range detection system of claim 1, wherein the controller is configured to select between a high intensity top hat distribution and a low intensity top hat distribution for the variable field of vision pattern.

6. The object and range detection system of claim 1, wherein the controller is configured to control the laser driver and the phased array optics to provide a spot array.

7. The object and range detection system of claim 6, wherein the spot array comprises at least two of an on-axis pattern, an off-axis pattern, a uniform pattern, a non-uniform pattern, a rectangular pattern, and an elliptical pattern.

8. The object and range detection system of claim 1, wherein the controller and the phased array optics are configured to change detection range and angles of detection of the laser in real time.

9. The object and range detection system of claim 1, wherein the laser driver and phased array optics comprise a solid state light distance and ranging (LiDAR) system.

10. A non-transitory computer-readable storage medium including instructions that, when executed by a processor, cause the processor to perform a process, the process comprising:
determining a region of interest to a vehicle; and
controlling a laser driver and phased array optics to provide a variable field of vision pattern for the vehicle based on the determined region of interest.

11. The non-transitory computer-readable storage medium of claim 10, wherein the region of interest is determined based on position information of the vehicle.

12. The non-transitory computer-readable storage medium of claim 10, wherein the region of interest is determined based on speed information of the vehicle.

13. The non-transitory computer-readable storage medium of claim 10, wherein the region of interest is determined based on a predicted turn of the vehicle.

14. The non-transitory computer-readable storage medium of claim 10 wherein the region of interest is determined based on a maneuver of the vehicle.

15. The non-transitory computer-readable storage medium of claim 14, wherein the maneuver is at least one of parking, highway driving, school zone driving, inclement weather driving, lane changing driving, urban driving, and suburban neighborhood driving.

16. The non-transitory computer-readable storage medium of claim 10, wherein the controlling selects between a high intensity top hat distribution and a low intensity top hat distribution.

17. The non-transitory computer-readable storage medium of claim 10, wherein the controlling provides at least one of variable detection angles, variable detection ranges, and temporal modulation.

18. The non-transitory computer-readable storage medium of claim 17, wherein the variable detection angles are configured to vary in two dimensions.

19. The non-transitory computer-readable storage medium of claim 10, wherein the controlling comprises controlling the laser driver and the phased array optics to provide a spot array.

20. The non-transitory computer-readable storage medium of claim 10, controlling comprises changing detection range and angles of detection of the laser in real time.
